(19) Europäisches Patentamt
European Patent Office
Office européen des brevets

(11) **EP 4 261 016 B1**

(12) **EUROPEAN PATENT SPECIFICATION**

(45) Date of publication and mention
of the grant of the patent:
**07.05.2025 Bulletin 2025/19**

(21) Application number: **22901636.5**

(22) Date of filing: **17.11.2022**

(51) International Patent Classification (IPC):
*B29C 65/18* (2006.01)    *H01M 50/178* (2021.01)
*H01M 50/129* (2021.01)    *H01M 50/105* (2021.01)
*B29C 65/02* (2006.01)    *B29C 65/00* (2006.01)
*H01M 50/119* (2021.01)    *H01M 50/121* (2021.01)
*H01M 50/188* (2021.01)    *B29L 31/34* (2006.01)
*B29K 705/02* (2006.01)    *B29L 31/00* (2006.01)

(52) Cooperative Patent Classification (CPC):
(C-Sets available)
B29C 66/83221; B29C 65/02; B29C 65/18;
B29C 66/1122; B29C 66/433; B29C 66/71;
B29C 66/72321; B29C 66/73921; B29C 66/81419;
B29C 66/81425; B29C 66/81431; H01M 50/105;
H01M 50/119; H01M 50/121; H01M 50/129;
(Cont.)

(86) International application number:
**PCT/KR2022/018218**

(87) International publication number:
**WO 2023/101278 (08.06.2023 Gazette 2023/23)**

(54) **POUCH-TYPE BATTERY AND SEALING DEVICE FOR POUCH-TYPE BATTERY**

BEUTELBATTERIE UND SIEGEL VORRICHTUNG FÜR BEUTELBATTERIE

BATTERIE DE TYPE POCHE ET DISPOSITIF DE SCELLAGE POUR BATTERIE DE TYPE POCHE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **30.11.2021 KR 20210167905**

(43) Date of publication of application:
**18.10.2023 Bulletin 2023/42**

(73) Proprietor: **LG Energy Solution, Ltd.
Seoul 07335 (KR)**

(72) Inventors:
• **NA, Seung Ho**
**Daejeon 34122 (KR)**
• **CHOI, Kwang Hee**
**Daejeon 34122 (KR)**
• **HA, Dong Kyun**
**Daejeon 34122 (KR)**
• **LEE, Yoon Beom**
**Daejeon 34122 (KR)**
• **KIM, Do Woo**
**Daejeon 34122 (KR)**
• **LEE, Hye Ji**
**Daejeon 34122 (KR)**

(74) Representative: **Plasseraud IP
104 Rue de Richelieu
CS92104
75080 Paris Cedex 02 (FR)**

(56) References cited:
KR-A- 20160 096 417    KR-A- 20160 096 417
KR-A- 20190 023 650    KR-A- 20200 043 402
KR-B1- 101 487 092    KR-B1- 101 527 124
KR-B1- 101 527 124

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
**H01M 50/188;** B29C 66/919; B29K 2705/02;
B29L 2031/3468; B29L 2031/7146; Y02E 60/10

C-Sets
**B29C 66/71, B29K 2023/12;**
**B29C 66/71, B29K 2067/003;**
**B29C 66/71, B29K 2077/00**

## Description

[Technical Field]

This application claims the benefit of priority based on Korean Patent Application No. 10-2021-0167905, filed on November 30, 2021.
The present disclosure relates to a pouch-type battery and a sealing device for the pouch-type battery which prevent a phenomenon in which a thickness of a lower pouch is reduced and thus safety is degraded in a process of performing a sealing process through heat fusion. [Background Art]

Technological development and demand for mobile devices are increasing, demand for secondary batteries as energy sources that replace fossil fuels is rapidly increasing, and accordingly, much research on secondary batteries that may satisfy various needs has been conducted. KR 2016 0096417 discloses an apparatus and method for sealing pouch of a secondary battery. KR 101 527 124 discloses an apparatus and method for sealing a pouch case of a secondary battery

When secondary batteries are viewed in the terms of a shape of a battery case, secondary batteries are representatively classified into cylindrical batteries and prismatic batteries in which electrode assemblies are embedded in a cylindrical metallic can and a prismatic metallic can and pouch-type batteries in which an electrode assembly is embedded in an aluminum laminate sheet pouch-type case. Further, in terms of materials, there is a high demand for lithium secondary batteries, such as lithium-ion batteries and lithium-ion polymer batteries, which are excellent in terms of high energy density, discharge voltage, and output stability.

Among them, the demand for the pouch-type battery is high because of the advantages that the pouch-type battery may be thin in terms of a shape and may be easily laminated and arranged, and the shape thereof may be partially deformed. The pouch-type battery has a structure in which an electrode assembly and an electrolyte are embedded in a pouch-shaped laminate sheet in which the electrode assembly may be accommodated, and a resin layer of the laminate sheet may be fused by heat.

The pouch-type battery is subjected to heat fusion in which heat and pressure are applied to the laminate sheets vertically overlapping each other along a circumference of the battery case to perform sealing treatment so that the electrode assembly is not exposed to the outside and the electrolyte does not leak. Further, an electrode lead protrudes outward from the battery case of the pouch-type battery. A lead film is attached to a surface of the electrode lead, the lead film made of an insulating resin material is heat-fused together with the laminate sheet, that is, the pouch, and thus the surrounding of the electrode lead is more firmly sealed.

However, when the pouch is heat-fused, a difference in the thickness of a pair of pouches surrounding the electrode assembly and the electrode lead often occurs after the heat-fusion. In order to seal the electrode lead and the pouch, the heat and pressure are applied using a pair of upper and lower sealing blocks. In the sealing process, after the lower sealing block is raised to support the lower pouch and the electrode lead, the upper sealing block is lowered to apply the heat and pressure. Accordingly, since more heat is supplied to the lower pouch and the electrode lead, the thickness of a resin layer of the lower pouch is smaller than that of an upper pouch.

The relatively thin lower pouch is vulnerable to internal or external pressure. For example, when pressure that is smaller than a prescribed endurance limit is applied to the pouch-type battery, the upper pouch withstands the pressure, but the lower pouch bursts, or the resin layer of the lower pouch is stretched and broken due to an internal pressure applied by a gas generated inside the pouch, and thus a sealing part may become open.

[Disclosure]

[Technical Problem]

An objective of an aspect of the present invention is to provide a pouch-type battery and a sealing device for the pouch-type battery which prevent a thickness of a lower pouch from being reduced even after sealing treatment through heat fusion.

[Technical Solution]

An aspect of the present invention provides a sealing device for a pouch-type battery. In an embodiment, the sealing device for a pouch-type battery according to the present invention includes an upper sealing block having a two-stage upper sealing groove including a first upper step forming a bottom surface and a second upper step formed between the first upper step and a surface thereof, and a lower sealing block having a two-stage lower sealing groove including a first lower step forming the bottom surface and a second lower step formed between the first lower step and a surface thereof. Further, the upper sealing block may be in contact with a first surface of an electrode lead sealing part of the pouch-type battery, and the lower sealing block may be in contact with a second surface of the electrode lead sealing part of the pouch-type battery at a position facing the upper sealing block. In addition, the sealing device for a pouch-type battery according to an aspect of the present invention may satisfy condition 1 as follows.

[Condition 1]

$$6.5 \leq \frac{B2-B1}{B1} \times 100 \leq 15\ (\%)$$

In condition 1, B1 denotes an average depth difference between the first upper step and the second upper step in the upper sealing block, and B2 denotes an average depth difference between the first lower step and the second lower step in the lower sealing block.

In an embodiment, an average depth difference B1 between the first upper step and the second upper step in the upper sealing block may be in a range of 200 $\mu$m to 280 $\mu$m. Further, an average depth difference B2 between the first lower step and the second lower step in the lower sealing block may be in a range of 220 $\mu$m to 320 $\mu$m.

In an embodiment, a difference between an average depth A1 of the second upper step and an average depth A2 of the second lower step may be 10 $\mu$m or less. In detail, the difference between the average depth A1 of the second upper step and the average depth A2 of the second lower step may be in a range of 0.1 $\mu$m to 10 $\mu$m or 0.1 $\mu$m to 5 $\mu$m. For example, the average depth A1 of the second upper step and the average depth A2 of the second lower step may be substantially the same.

In a detailed embodiment, the average depth A1 of the second upper step and the average depth A2 of the second lower step may be in a range of 40 $\mu$m to 100 $\mu$m or in a range of 70 $\mu$m to 80 $\mu$m.

In still another embodiment, the upper and lower sealing blocks may have structures that press and heat the electrode lead sealing part of the pouch-type battery from both sides thereof. In this case, for example, a heating temperature may be in a range of 110 °C to 200 °C.

Further, an aspect of the present invention provides a pouch-type battery manufactured through the above-described sealing device. In an embodiment, the pouch-type battery according to the present invention includes an electrode assembly, an electrode lead configured to extend from an electrode tab of the electrode assembly, and upper and lower pouches that accommodate and seal the electrode assembly. Further, condition 2 is satisfied with respect to the electrode lead sealing part that is a structure in which the upper and lower pouches surround the electrode assembly on both sides thereof so that the electrode lead of the electrode assembly is exposed.

[Condition 2]

$$1 \leq T2\text{-}T1 \leq 25\ (\mu m)$$

In condition 2,

T1 denotes an average thickness of the upper pouch formed on a first surface of the electrode lead, and
T2 denotes an average thickness of the lower pouch formed on a second surface of the electrode lead.

In an embodiment, in the pouch-type battery according to the present invention, with respect to the electrode lead sealing part, the average thickness T1 of the upper pouch formed on the first surface of the electrode lead may be in a range of 80 $\mu$m to 90 $\mu$m, and the average thickness T2 of the lower pouch formed on the second surface of the electrode lead may be in a range of 91 $\mu$m to 105 $\mu$m.

In yet another embodiment, each of the upper and lower pouches may include a first resin layer positioned on an inner surface thereof, a metal layer, and a second resin layer positioned on an outer surface thereof. Further, with respect to the electrode lead sealing part, a thickness ratio of the first resin layer of the upper pouch may be in a range of 10% to 18% with respect to a total thickness of the upper pouch. Further, a thickness ratio of the first resin layer of the lower pouch may be in a range of 20% to 30% with respect to a total thickness of the lower pouch.

In a detailed embodiment, with respect to the electrode lead sealing part, a thickness of the first resin layer of the upper pouch may be averagely in a range of 8 $\mu$m to 17 $\mu$m, and a thickness of the first resin layer of the lower pouch may be averagely in a range of 20 $\mu$m to 30 $\mu$m.

In yet another embodiment, the pouch-type battery according to the present invention may include a non-sealing area that corresponds to a position in which the electrode assembly is accommodated and is not sealed between the upper and lower pouches, and in the non-sealing area, each of the thickness of the first resin layer of the upper and lower pouches may be averagely in a range of 50 μm to 100 μm.

In a detailed embodiment, in each of the upper and lower pouches, the first resin layer may contain a polypropylene resin, the metal layer may contain aluminum or an aluminum alloy, and the second resin layer may contain a polyethylene terephthalate (PET) resin.

For example, the electrode assembly may be a stack-type electrode assembly.

[Advantageous Effects]

A sealing device for a pouch-type battery of the present technology having the above configuration can prevent a thickness of a lower pouch from being reduced even after sealing treatment through heat fusion. Further, the manufactured pouch-type battery can maintain a sealing property even in a higher internal and external pressure change.

[Brief Description of the Drawings]

FIG. 1 is a schematic diagram illustrating a process of performing sealing using a sealing device 10 (hereinafter, simply referred to as a "sealing device") of a pouch-type battery according to an embodiment of the present invention.
FIG. 2 is a schematic cross-sectional view illustrating the sealing device for the pouch-type battery according to an embodiment of the present invention.
FIG. 3 is a schematic diagram illustrating a process of sealing an electrode lead formation part of the pouch-type battery using the sealing device for the pouch-type battery according to an embodiment of the present invention.
FIG. 4 is a schematic diagram illustrating a pouch-type battery 500 sealed by the sealing device for the pouch-type battery according to an embodiment of the present invention, and FIG. 5 is a partially enlarged view of a cross section A-A' in the pouch-type battery 500 of FIG. 4.

[Detailed Description]

The present invention may have various embodiments, and thus specific embodiments will be described in detail below.

However, it should be understood that the embodiments of the present invention are defined by the appended claims.

It should be understood in the present invention that terms such as "include" or "have" are intended to indicate that features, numbers, steps, operations, components, parts, or combinations thereof described in the specification are present and do not exclude in advance the possibility of the presence or addition of one or more other features, numbers, steps, operations, components, parts, or combinations thereof.

Further, in the present invention, when it is described that a first part such as a layer, a film, a region, and a plate is positioned "above" a second part, this includes not only a case in which the first part is "directly above" the second part but also a case in which a third part is present therebetween. In contrast, when it is described that a first part such as a layer, a film, a region, and a plate is positioned "below" a second part, this includes not only a case in which the first part is "directly below" the second part but also a case in which a third part is present therebetween. Further, in the present application, a state in which a first part is disposed "above" a second part may include not only a state in which the first part is disposed above the second part but also a state in which the first part is disposed below the second part.

Embodiments of the present invention provide a sealing device for a pouch-type battery. In an embodiment, the sealing device for a pouch-type battery according to the present invention includes an upper sealing block having a two-stage upper sealing groove including a first upper step forming a bottom surface and a second upper step formed between the first upper step and a surface thereof, and a lower sealing block having a two-stage lower sealing groove including a first lower step forming the bottom surface and a second lower step formed between the first lower step and a surface thereof. Further, the upper sealing block is in contact with a first surface of an electrode lead sealing part of the pouch-type battery, and the lower sealing block is in contact with a second surface of the electrode lead sealing part of the pouch-type battery at a position facing the upper sealing block.

In embodiments of the present invention, the electrode lead sealing part means an area in which an electrode lead protrudes from an electrode assembly. In detail, when viewed in a cross-sectional structure, the electrode lead sealing part has a structure in which a lead metal formed of aluminum or copper metal protrudes, and an area in which the lead metal is surrounded by a lead film and is sealed by a pouch. An upper pouch has a structure surrounding an upper side of the electrode lead, and a lower pouch has a structure surrounding a lower side of the electrode lead. In embodiments of the present invention, the first upper step and the first lower step are areas in which upper and lower portions of the lead metal surrounded by the lead film are inserted thereinto and sealed therefrom. Further, the second upper step and the second lower step are areas that surround and seal an extension portion of the lead film remaining on a side surface of the lead metal on upper and lower sides thereof.

In addition, the sealing device for a pouch-type battery according to embodiments of the present invention satisfies condition 1 as follows.

[Condition 1]

$$6.5 \leq \frac{B2-B1}{B1} \times 100 \leq 15\,(\%)$$

In condition 1, B1 denotes an average depth difference between the first upper step and the second upper step in the upper sealing block, and B2 denotes an average depth difference between the first lower step and the second lower step in the lower sealing block.

The sealing device for a pouch-type battery according to embodiments of the present invention secures a space in a lower area, thereby preventing a total thickness of the lower pouch from being reduced while sealing the electrode lead sealing part. In detail, in the sealing device for a pouch-type battery, as the first lower step of the lower sealing block is formed deeply, heat and pressure are prevented from being concentrated on the lower pouch.

In embodiments of the present invention, a value of a formula specified in condition 1 is in a range of 6.5% to 15%, 6.5% to 10%, 7.5% to 15%, 7.5% to 9%, or 8% to 8.5%. As the value of condition 1 satisfies the above range, the sealing device for a pouch-type battery according to embodiments of the present invention can minimize a reduction in the thickness of the lower pouch and prevent widening of the pouch surrounding the electrode lead sealing part.

In an embodiment, an average depth difference B1 between the first upper step and the second upper step in the upper sealing block is in a range of 200 $\mu$m to 280 $\mu$m. Here, the depth difference between the first upper step and the second upper step means, for example, a depth from a bottom surface of the second upper step to a bottom surface of the first upper step. In detail, the depth difference B1 between the first upper step and the second upper step is in a range of 200 $\mu$m to 250 $\mu$m, 200 $\mu$m to 280 $\mu$m, or 220 $\mu$m to 250 $\mu$m.

Further, an average depth difference B2 between the first lower step and the second lower step in the lower sealing block is in a range of 220 $\mu$m to 320 $\mu$m. Here, the depth difference between the first lower step and the second lower step means, for example, a depth from a bottom surface of the second lower step to a bottom surface of the first lower step. In detail, the depth difference B2 between the first lower step and the second lower step is in a range of 220 $\mu$m to 300 $\mu$m, 250 $\mu$m to 320 $\mu$m, or 250 $\mu$m to 280 $\mu$m.

In embodiments of the present invention, a depth of the lower sealing groove formed to receive the lower pouch is formed deeper than a depth of the upper sealing groove formed to receive the upper pouch with respect to the electrode lead sealing part. Therefore, a reduction in the thickness of the lower pouch in a sealing process is minimized. For example, the average depth difference B2 between the first lower step and the second lower step in the lower sealing block is formed greater than the average depth difference B1 between the first upper step and the second upper step in the upper sealing block by 5 $\mu$m to 20 $\mu$m.

In an embodiment, a difference between an average depth A1 of the second upper step and an average depth A2 of the second lower step is 10 $\mu$m or less. In detail, the difference between the average depth A1 of the second upper step and the average depth A2 of the second lower step is in a range of 0.1 $\mu$m to 10 $\mu$m or 0.1 $\mu$m to 5 $\mu$m. For example, the average depth A1 of the second upper step and the average depth A2 of the second lower step are substantially the same. In a detailed embodiment, the average depth A1 of the second upper step and the average depth A2 of the second lower step are in a range of 40 $\mu$m to 100 $\mu$m or in a range of 70 $\mu$m to 80 $\mu$m.

In still another embodiment, the upper and lower sealing blocks have structures that press and heat the electrode lead sealing part of the pouch-type battery from both sides thereof. In this case, a heating temperature is averagely in a range of 110 °C to 200 °C. The sealing device for a pouch-type battery according to an embodiment of the present invention is a device for applying heat and pressure to an edge area of the pouch-type battery to seal the pouch-type battery. Resin layers positioned on inner surfaces of the upper and lower pouches are partially melted through heating, and bonding between the partially melted resin layers of the upper and lower pouches is performed through pressing. A heating temperature may be selected in consideration of the types of the applied inner resin layers. For example, the inner surface of the pouch may be formed of a polypropylene (PP) layer having a melting point in a range of 130 °C to 171 °C, and in this case, the heating temperature may be controlled in a range of 120 °C to 180 °C.

Further, embodiments of the present invention provide a pouch-type battery manufactured through the above-described sealing device. The pouch-type battery according to embodiments of the present invention is implemented such that a total thickness of the lower pouch is a predetermined level or more with respect to the electrode lead sealing part. In an embodiment, the pouch-type battery according to the present invention includes an electrode assembly, an electrode lead configured to extend from an electrode tab of the electrode assembly, and upper and lower pouches that accommodate and seal the electrode assembly. Further, the pouch-type battery according to embodiments of the present invention satisfies condition 2 with respect to the electrode lead sealing part that is a structure in which the upper and lower pouches surround the electrode assembly on both sides thereof so that the electrode lead of the electrode assembly is exposed.

[Condition 2]

$$1 \leq T2\text{-}T1 \leq 25 \ (\mu m)$$

In condition 2, T1 denotes an average thickness of the upper pouch formed on a first surface of the electrode lead, and T2 denotes an average thickness of the lower pouch formed on a second surface of the electrode lead.

In embodiments of the present invention, the pouch means a battery case material surrounding a battery. The pouch-type battery includes a structure in which, with respect to the electrode assembly, both upper and lower surfaces are covered with the pouch and edges thereof are sealed. During the sealing process, the thickness of the lower pouch is reduced, which causes product defects. In the pouch-type battery according to embodiments of the present invention, the reduction in the thickness of the lower pouch is minimized with respect to the electrode lead sealing part.

In a detailed embodiment, the average thickness T1 of the upper pouch formed on the first surface of the electrode lead is in a range of 80 $\mu m$ to 90 $\mu m$, and the average thickness T2 of the lower pouch formed on the second surface of the electrode lead is in a range of 91 $\mu m$ to 105 $\mu m$. In detail, the average thickness T1 of the upper pouch formed on the first surface of the electrode lead is in a range of 83 $\mu m$ to 88 $\mu m$, and the average thickness T2 of the lower pouch formed on the second surface of the electrode lead is in a range of 94 $\mu m$ to 100 $\mu m$.

In detail, a thickness difference T2-T1 defined in condition 2 is in a range of 1 $\mu m$ to 25 $\mu m$, 5 $\mu m$ to 20 $\mu m$, 6 $\mu m$ to 17 $\mu m$, or 8 $\mu m$ to 12 $\mu m$.

The pouch-type battery according to embodiments of the present invention has a structure in which the lower pouch is thicker than the upper pouch with respect to the electrode lead sealing part. In general, during the sealing process, the heat and pressure are concentrated on the lower pouch, so that the thickness of the lower pouch tends to become relatively small. However, in an embodiment of the present invention, by applying the above-described sealing device, the average thickness of the lower pouch is formed thicker than that of the upper pouch by 1 $\mu m$ or more, particularly, by 6 $\mu m$ or more. When an external force is applied to the pouch-type battery or an internal pressure thereof increases, the electrode lead sealing part bursts, and in particular, a portion of the lower pouch of the electrode lead sealing part is first widened. In an embodiment of the present invention, in the electrode lead sealing part of the pouch-type battery, a residual rate of the lower pouch can increase, thereby improving sealability of the battery.

The pouch has a structure including, for example, a first resin layer positioned on an inner surface thereof, a metal layer, and a second resin layer positioned on an outer surface thereof. During the sealing process, a thickness of the first resin layer positioned on the inner surface is greatly changed, and thicknesses of the metal layer and the second resin layer are hardly changed. During the sealing process, for example, the thickness of the first resin layer is greatly reduced, and the thicknesses of the metal layer and the second resin layer are maintained without change. In particular, in contrast to the upper pouch, in the lower pouch, a thickness of the first resin layer is greatly reduced, which results in poor sealing and causes a sealing portion to easily burst when internal and external pressures increase.

In an embodiment, each of the upper and lower pouches according to the present invention includes the first resin layer positioned on an inner surface thereof, the metal layer, and the second resin layer positioned on an outer surface thereof. Further, with respect to the electrode lead sealing part, a thickness ratio of the first resin layer of the upper pouch is in a range of 10% to 18% with respect to the thickness of the upper pouch, and a thickness ratio of the first resin layer of the lower pouch is in a range of 20% to 30% with respect to the thickness of the lower pouch. In detail, in an embodiment of the present invention, the thickness ratio of the first resin layer of the upper pouch is in a range of 13% to 17% with respect to the thickness of the upper pouch, and the thickness ratio of the first resin layer of the lower pouch is in a range of 22% to 28% with respect to the thickness of the lower pouch.

In an embodiment of the present invention, the thickness of the first resin layer in the lower pouch is formed thickly with respect to the electrode lead sealing part. In a pouch laminate structure, the first resin layer is a layer that provides an adhesive force during the sealing process. As the thickness of the first resin layer in the lower pouch is formed thickly, an adhesive force with the electrode lead can increase, and excellent durability can be implemented even under a high pressure.

In a detailed example, with respect to the electrode lead sealing part, the thickness of the first resin layer in the upper pouch is averagely in a range of 8 $\mu m$ to 17 $\mu m$, and particularly, averagely in a range of 10 $\mu m$ to 15 $\mu m$. Further, with respect to the electrode lead sealing part, the thickness of the first resin layer in the lower pouch is averagely in a range of 20 $\mu m$ to 30 $\mu m$, and particularly, averagely in a range of 22 $\mu m$ to 26 $\mu m$.

In another embodiment, the pouch-type battery according to the present invention includes a non-sealing area that corresponds to a position in which the electrode assembly is accommodated and is not sealed between the upper and lower pouches. Correspondingly, a portion in which the upper and lower pouches are bonded through the heat fusion or the like is referred to as a sealing area. In the non-sealing area, the thicknesses of the first resin layers of the upper and lower pouches are averagely in a range of 50 $\mu$m to 100 $\mu$m.

The pouch has a structure including, for example, the first resin layer positioned on an inner surface thereof, the metal layer, and the second resin layer positioned on an outer surface thereof. For example, in the upper and lower pouches, the first resin layer contains a PP resin, and the metal layer contains aluminum or an alloy thereof. Further, the second resin layer contains a polyethylene terephthalate (PET) resin, and in some cases, may have a two-layered structure including a nylon layer and a PET layer formed thereon. Further, the thickness of the pouch may change depending on a product or standard but is averagely in a range of 120 $\mu$m to 200 $\mu$m. Further, with respect to the pouch before the sealing process is performed, the thickness of the first resin layer in the pouch is averagely in a range of 50 $\mu$m to 100 $\mu$m.

During the sealing process, the thickness of the first resin layer positioned on the inner surface is greatly changed, and the thicknesses of the metal layer and the second resin layer are hardly changed. In detail, the PP resin forming the first resin layer has a relatively low melting point. Thus, when heat for sealing is applied, a surface of the first resin layer is partially melted and heat-fused to a facing layer. However, during the sealing process, a pressure is also applied in addition to the heat, and as a result, the thickness of the first resin layer is greatly reduced. A reduction in the thickness of the first resin layer causes a sealing defect and the sealing portion to easily burst when an internal pressure increases.

In an embodiment, the electrode assembly according to the present invention is a stack-type electrode assembly. The stack-type electrode assembly includes a structure in which a unit cell structure including a positive electrode, a separator, and a negative electrode is repeatedly stacked. The positive electrode and the negative electrode include all cases in which an active material is formed on one surface or both surfaces of a current collector. The number of times of repetitions of the unit cell is in a range of, for example, 20 times to 80 times and may change according to product specifications or required specifications. In the pouch-type battery according to an embodiment of the present invention, the form of the electrode assembly does not exclude a cylindrical structure and a jelly-roll structure, but the stack-type electrode assembly may be applied more effectively.

[Detailed Description of the Preferred Embodiments]

Hereinafter, specific examples of embodiments of the present invention will be described in detail with reference to the accompanying drawings, but the scope of the present invention is not limited thereto.

**[First Embodiment]**

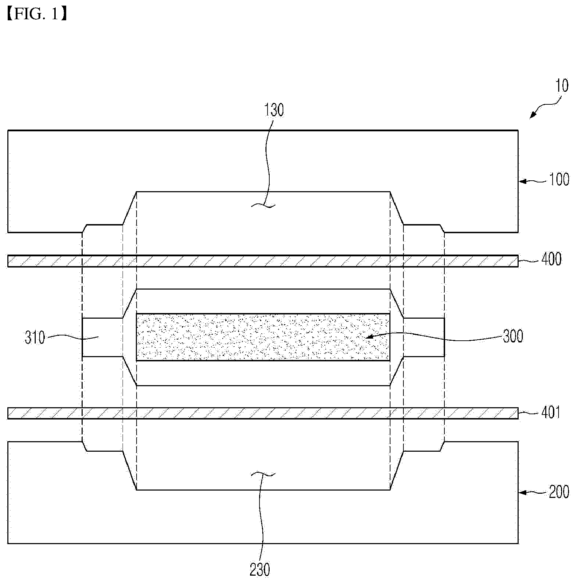

FIG. 1 is a schematic diagram illustrating a process of performing sealing using a sealing device 10 (hereinafter, simply referred to as a "sealing device") of a pouch-type battery according to an embodiment of the present invention. Referring to FIG. 1, a sealing device 10 of an embodiment of the present invention has a structure in which an upper sealing block 100 and a lower sealing block 200 apply pressure and heat to perform sealing in a state in which an upper pouch 400 and a lower pouch 401 are arranged above and below an electrode lead 300, respectively. The electrode lead 300 has a structure made of aluminum, and an outer circumferential surface thereof is surrounded by a lead film 310. Further, the sealing device 10 includes the upper sealing block 100 and the lower sealing block 200 and has a structure in which sealing grooves 130 and 230 are formed in two stages.

In an embodiment of the present invention, the lower sealing groove 230 formed in the lower sealing block 200 is formed relatively deeper than the upper sealing groove 130 formed in the upper sealing block 100.

**[Second Embodiment]**

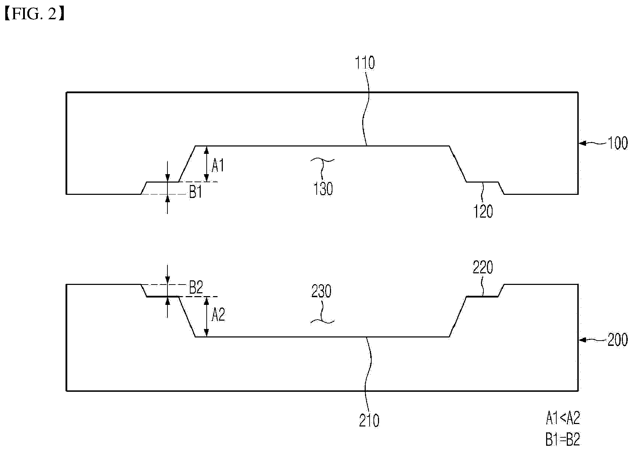

FIG. 2 is a schematic cross-sectional view illustrating the sealing device for the pouch-type battery according to an embodiment of the present invention.

Referring to FIG. 2, the sealing device 10 includes the upper sealing block 100 and the lower sealing block 200. The sealing grooves 130 and 230 formed in two stages are formed in the upper sealing block 100 and the lower sealing block 200.

The upper sealing block 100 is provided with a two-stage upper sealing groove 130 including a first upper step 110 forming a bottom surface and a second upper step 120 formed between the first upper step 110 and a surface thereof. Here, with regard to the bottom surface and the surface, the bottom surface means a lowermost surface, and the surface means an uppermost surface, with respect to a direction in which the upper sealing groove 130 is viewed inward.

The lower sealing block 200 is provided with the lower sealing groove 230 formed in two stages. The lower sealing groove 230 includes a first lower step 210 forming the bottom surface and a second lower step 220 formed between the first lower step 210 and the surface.

In the sealing device 10, the upper sealing groove 130 formed in the upper sealing block 100 and the lower sealing groove 230 formed in the lower sealing block 200 have different step heights. In detail, a height A2 of the first lower step is greater than a height A1 of the first upper step (A1<A2). Further, a height B1 of the second upper step and a height B2 of the second lower step are similarly equal to each other, and a difference therebetween is 10 $\mu$m or less.

For example, in the sealing device 10, the height A1 of the first upper step formed in the upper sealing block 100 is 240 $\mu$m, and the height B1 of the second upper step is 76 $\mu$m. Further, the height A2 of the first lower step formed in the lower sealing block 200 is 260 $\mu$m, and the height B2 of the second lower step is 76 $\mu$m. This state is different from a sealing device according to the related art in which upper and lower sealing blocks are symmetrical to each other. In the sealing device according to the related art, for example, the heights of the first upper step and the first lower step are controlled equally to a level of 250 $\mu$m. An embodiment of the present invention is differentiated in that the height A1 of the first upper step is lowered and the height A2 of the first lower step is increased.

### [Third Embodiment]

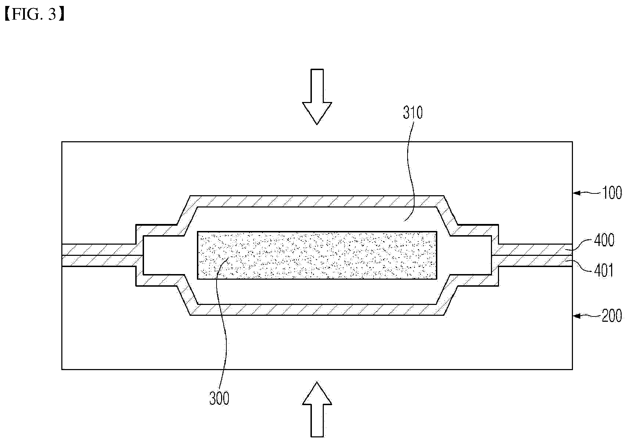

FIG. 3 is a schematic diagram illustrating a process of sealing an electrode lead formation part of the pouch-type battery using the sealing device for the pouch-type battery according to an embodiment of the present invention.

Referring to FIG. 3, the first upper step 110 of the upper sealing block 100 corresponds to an upper portion of the electrode lead 300 surrounded by the lead film 310. Further, the second upper step 120 extends laterally from the electrode lead 300 and corresponds to an upper portion of the remaining lead film 310. Further, the first lower step 210 of the lower sealing block 200 corresponds to a lower portion of the electrode lead 300 surrounded by the lead film 310, and the second lower step 220 extends laterally from the electrode lead 300 and corresponds to a lower portion of the remaining lead film 310.

The upper sealing block 100 and the lower sealing block 200 press the electrode lead 300 interposed between the upper and lower pouches 400 and 401 while being heated by a built-in heating coil. The upper and lower pouches 400 and 401 have a structure in which an aluminum layer, a nylon resin layer, and a PET resin layer are laminated on a PP resin layer positioned therein. The heating temperature by the upper sealing block 100 and the lower sealing block 200 is about 150 °C to 180 °C, and the PP resin forming the inner surface of the pouch is partially melted and heat-fused to implement an adhesive force.

### [Fourth Embodiment]

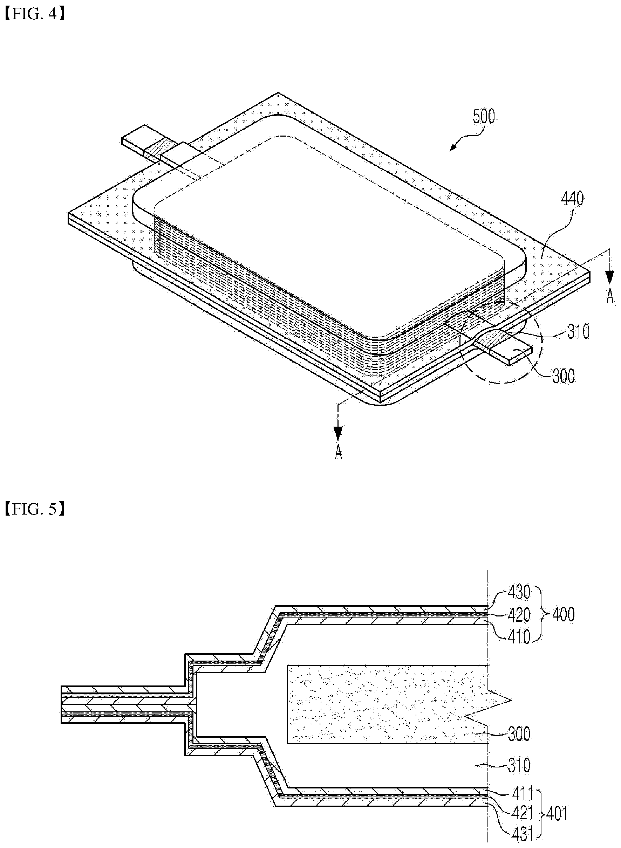

FIG. 4 is a schematic diagram illustrating a pouch-type battery 500 sealed by the sealing device for the pouch-type battery according to an embodiment of the present invention, and FIG. 5 is a partially enlarged view of a cross section A-A' in the pouch-type battery 500 of FIG. 4.

Referring to FIG. 4, the pouch-type battery 500 has a structure in which a pouch-type battery case 440 surrounds the electrode assembly accommodated therein and the electrode lead 300 extending from the electrode tab protrudes outward. The lead film 310 is positioned between the electrode lead 300 and the pouch-type battery case 440. The pouch-type battery case 440 includes the upper pouch 400 and the lower pouch 401, and an edge thereof is sealed.

FIG. 5 illustrates a cross section of a sealing area of the electrode lead 300. The upper pouch 400 and the lower pouch 401 each have three-layered structures including first resin layers 410 and 411 formed therein, aluminum layers 420 and 421, and second resin layers 430 and 431 formed on the outside. Further, the electrode lead 300 has a structure surrounded by the lead film 310.

In an embodiment of the present invention, the safety of the battery is maximized by minimizing the reduction in the thickness of the first resin layer 411 in the lower pouch 401.

Hereinafter, the embodiments of present invention will be described in more detail through examples and the like.

### Example

The pouch-type battery was sealed using the sealing device illustrated in FIG. 2. The sealing was performed with respect to an area in which the electrode lead is formed. In the sealing process, a heating temperature was 180 °C, and detailed specifications of the sealing device are summarized in Table 1 below.

Further, the pouch applied to the pouch-type battery has a three-layered structure including a PP layer, an aluminum layer, and a PET layer. The total thickness of the pouch is 155 $\mu$m, and the thickness of the PP resin layer among them is 80 $\mu$m.

**Comparative Example**

The pouch-type battery was sealed in the same manner as the example except that specifications of the sealing device were changed to Table 1 below.

[Table 1]

| Classification | Height of step | Example | Comparative |
|---|---|---|---|
| | | | Example |
| Upper sealing block | Height ($\mu$m) of first upper step A1 | 76 | 76 |
| | Height ($\mu$m) of second upper step B1 | 240 | 250 |
| Lower sealing block | Height ($\mu$m) of first lower upper step A2 | 76 | 76 |
| | Height ($\mu$m) of second lower step B2 | 260 | 250 |

**Experimental Example 1: Evaluation of PP Residual Ratio of Pouch**

With regard to the sealed pouch-type battery in the example and the comparative example, a residual ratio of the PP layer was evaluated. The PP residual rate (%) was calculated by comparing the thickness of the PP layer before sealing with the thickness of the PP layer after sealing.

[Table 2]

| Classification | Example | Comparative Example |
|---|---|---|
| Thickness of PP layer before sealing | 80 $\mu$m | 80 $\mu$m |
| PP residual ratio in upper pouch | 16% | 27% |
| PP residual ratio in lower pouch | 30% | 13% |

Referring to Table 2, in the case of the comparative example, it can be seen that heat and pressure are concentrated on the lower pouch during the sealing process, and thus the PP residual ratio in the lower pouch is merely 13%.

In contrast, in the pouch-type battery according to the example, it can be seen that the PP residual ratio in the lower pouch reaches 30%. When the pouch bursts due to application of an external force or an increase in an internal pressure, the lower pouch is first widened among the electrode lead sealing part. Embodiments of the present invention increases the safety of the pouch-type battery by maximizing the PP residual ratio in the lower pouch in the electrode lead sealing part.

In addition, in the example, it was identified that the PP residual ratio in the upper pouch was as low as 16%. In the electrode lead sealing part, the upper pouch is heat-sealed more strongly, and thus the PP residual ratio in the upper pouch is reduced.

**Experimental Example**

Sealing strength and pressure-resistant strength were evaluated for the sealed pouch-type battery in the example and the comparative example. The evaluation results are illustrated in Table 3 below.

Sealing strength evaluation: a force is measured at a point at which the electrode lead sealing part is damaged by vertically applying a force under room temperature conditions.

Pressure-resistant strength: The pressure-resistant strength is measured under a condition of 60 °C, and particularly, a pressure is measured at a point at which the electrode lead sealing part is damaged by forming a hole on one side of the sealed pouch-type battery and injecting an inert gas (Ar) thereinto.

[Table 3]

| Classification | Example | Comparative Example |
|---|---|---|
| Sealing strength evaluation (N) | 100.9 | 63.7 |
| Pressure-resistant strength evaluation (atm) | 10.1 | 9.5 |

Referring to Table 3, it can be seen that the sealing strength and the pressure-resistant strength of the pouch-type battery according to an embodiment were significantly improved as compared to the comparative example.

Hereinabove, the present invention has been described in more detail through the drawings, the embodiments, and the like. However, the invention is defined by the appended claims.

[Description of Reference Numerals]

| 10: | Sealing device | 100: | Upper sealing block |
|---|---|---|---|
| 110: | First upper step | 120: | Second upper step |
| 130: | Upper sealing groove | 200: | Lower sealing block |
| 210: | First lower step | 220: | Second lower step |
| 230: | Lower sealing groove | | |
| 300: | Electrode lead | 310: | Lead film |
| 400: | Upper pouch | 401: | Lower pouch |
| 410, 411: | First resin layer | 420, 421: | Aluminum layer |
| 430, 431: | Second resin layer | 440: | Pouch-type battery case |
| 500: | Pouch-type battery | | |
| A1: | Height of first upper step | B1: | Height of second upper step |
| A2: | Height of first lower step | B2: | Height of second lower step |

**Claims**

1.  A sealing device (10) for a pouch-type battery (500) comprising:

    an upper sealing block (100) having a two-stage upper sealing groove (130), the two-stage upper sealing groove (130) including a first upper step (110) configured to form a first surface of the pouch-type battery case (440) and a second upper step (120) disposed between the first upper step (110) and a lower sealing block (200); and
    the lower sealing block (200) having a two-stage lower sealing groove (230), the two-stage lower sealing groove (230) including a first lower step (210) configured to form a second surface of the pouch-type battery case (440) and a second lower step (220) disposed between the first lower step (210) and the upper sealing block (100), wherein the upper sealing block (100) is configured to contact a first surface of an electrode lead sealing part of the pouch-type battery (500), and the lower sealing block (200) is configured to contact a second surface of the electrode lead sealing part of the pouch-type battery, wherein the lower sealing block (200) is spaced apart from and facing the upper sealing block (100), and
    **characterized in that** Condition 1 is satisfied,

    [Condition 1]

    $$6.5 \leq \frac{B2-B1}{B1} \times 100 \leq 15\,(\%)$$

    in which B1 denotes an average depth difference between the first upper step (110) and the second upper step (120) in the upper sealing block (100), and B2 denotes an average depth difference between the first lower step (210) and the second lower step (220) in the lower sealing block (200).

2.  The sealing device of claim 1, wherein the average depth difference B1 between the first upper step (110) and the second upper step (120) is in a range of 200 $\mu$m to 280 $\mu$m, and
    wherein the average depth difference B2 between the first lower step (210) and the second lower step (220) is in a range of 220 $\mu$m to 320 $\mu$m.

3.  The sealing device of claim 1, wherein a difference between an average depth A1 of the second upper step (120) and an average depth A2 of the second lower step (220) is 10 $\mu$m or less.

4.  The sealing device of claim 3, wherein the average depth A1 of the second upper step (120) and the average depth A2 of the second lower step (220) are in a range of 40 $\mu$m to 100 $\mu$m.

5. The sealing device of claim 1, wherein the upper and lower sealing blocks (100, 200) are configured to press and heat the electrode lead (300) sealing part of the pouch-type battery (500) from both sides thereof, and wherein a heating temperature is in a range of 110 °C to 200 °C.

6. A pouch-type battery (500) comprising:

an electrode assembly;
an electrode lead (300) protruding from the electrode assembly;
an upper pouch (400) and a lower pouch (401) configured to accommodate the electrode assembly; and
an electrode sealing part,
wherein the electrode sealing part has a structure wherein the structure includes the upper and lower pouches (400, 401) configured to surround the electrode assembly so that the electrode lead (300) of the electrode assembly protrudes from the pouch-type battery cell (500), **characterized in that** the Condition 2 is satisfied,

[Condition 2]

$$1 \leq T2\text{-}T1 \leq 25 \ (\mu m),$$

in which T1 denotes an average thickness of the upper pouch (400) in the electrode lead sealing part disposed on a first surface of the electrode lead (300), and
in which T2 denotes an average thickness of the lower pouch (401) in the electrode lead sealing part disposed on a second surface of the electrode lead (300).

7. The pouch-type battery (500) of claim 6, wherein T1 is in a range of 80 $\mu m$ to 90 $\mu m$, and wherein T2 is in a range of 91 $\mu m$ to 105 $\mu m$.

8. The pouch-type battery (500) of claim 6, wherein each of the upper and lower pouches (400, 401) includes:

a first resin layer (410, 411) positioned on an inner surface thereof;
a metal layer; and
a second resin layer (430, 431) positioned on an outer surface thereof,
wherein, in the electrode lead sealing part, a ratio of a thickness of the first resin layer (410) of the upper pouch (400) to a total thickness of the upper pouch (400) is in a range of 10% to 18%, and
wherein, in the electrode lead sealing part, a ratio of a thickness of the first resin layer (411) of the lower pouch (401) to a total thickness of the lower pouch (401) is in a range of 20% to 30%.

9. The pouch-type battery (500) of claim 8,

wherein an average thickness of the first resin layer (410) of the upper pouch (400) in the electrode lead sealing part is in a range of 8 $\mu m$ to 17 $\mu m$, and
wherein an average thickness of the first resin layer (411) of the lower pouch (401) in the electrode lead sealing part is in a range of 20 $\mu m$ to 30 $\mu m$.

10. The pouch-type battery (500) of claim 8 further including a non-sealing area configured to accommodate the electrode assembly,

wherein the non-sealing area is not sealed between the upper and lower pouches (400, 401), and
wherein an average thickness of the first resin layer (410, 411) of each of the upper and lower pouches (400, 401) in the non-sealing area is in a range of 50 $\mu m$ to 100 $\mu m$.

11. The pouch-type battery (500) of claim 6, wherein each of the upper and lower pouches (400, 401) includes:

a first resin layer (410, 411) having a polypropylene resin,
a metal layer (420, 421) having aluminum or an aluminum alloy, and
a second resin layer (430, 431) having a polyethylene terephthalate (PET) resin.

12. The pouch-type battery (500) of claim 6, wherein the electrode assembly is a stack-type electrode assembly.

**Patentansprüche**

1. Dichtvorrichtung (10) für eine Beuteltyp-Batterie (500), umfassend:

einen oberen Dichtblock (100), welcher eine zweistufige obere Dichtnut (130) aufweist, wobei die zweistufige obere Dichtnut (130) eine erste obere Stufe (110), welche dazu eingerichtet ist, eine erste Fläche des Beuteltyp-Batteriegehäuses (440) zu bilden, und eine zweite obere Stufe (120) umfasst, welche zwischen der ersten Stufe (110) und einem unteren Dichtblock (200) angeordnet ist; und
den unteren Dichtblock (200), welcher eine zweistufige untere Dichtnut (230) aufweist, wobei die zweistufige untere Dichtnut (230) eine erste untere Stufe (210), welche dazu eingerichtet ist, eine zweite Fläche des Beuteltyp-Batteriegehäuses (440) zu bilden, und eine zweite untere Stufe (220) umfasst, welche zwischen der ersten unteren Stufe (210) und dem oberen Dichtblock (100) angeordnet ist,
wobei der obere Dichtblock (100) dazu eingerichtet ist, eine erste Fläche eines Elektrodenleitungsdichtteils der Beuteltyp-Batterie (500) zu kontaktieren, und der untere Dichtblock (200) dazu eingerichtet ist, eine zweite Fläche des Elektrodenleitungsdichtteils der Beuteltyp-Batterie zu kontaktieren, wobei der untere Dichtblock (200) von dem oberen Dichtblock (100) beabstandet und ihm zugewandt ist, und
**dadurch gekennzeichnet, dass** die Bedingung 1 erfüllt ist,

[Bedingung 1]

$$6,5 \le \frac{B2 - B1}{B1} \times 100 \le 15 \ (\%)$$

wobei B1 eine durchschnittliche Tiefendifferenz zwischen der ersten oberen Stufe (110) und der zweiten oberen Stufe (120) in dem oberen Dichtblock (100) bezeichnet und B2 eine durchschnittliche Tiefendifferenz zwischen der ersten unteren Stufe (210) und der zweiten unteren Stufe (220) in dem unteren Dichtblock (200) bezeichnet.

2. Dichtvorrichtung nach Anspruch 1, wobei die durchschnittliche Tiefendifferenz B1 zwischen der ersten oberen Stufe (110) und der zweiten oberen Stufe (120) in einem Bereich von 200 $\mu$m bis 280 $\mu$m liegt und wobei die durchschnittliche Tiefendifferenz B2 zwischen der ersten unteren Stufe (210) und der zweiten unteren Stufe (220) in einem Bereich von 220 $\mu$m bis 320 $\mu$m liegt.

3. Dichtvorrichtung nach Anspruch 1, wobei eine Differenz zwischen einer durchschnittlichen Tiefe A1 der zweiten oberen Stufe (120) und einer durchschnittlichen Tiefe A2 der zweiten unteren Stufe (220) 10 $\mu$m oder weniger beträgt.

4. Dichtvorrichtung nach Anspruch 3, wobei die durchschnittliche Tiefe A1 der zweiten oberen Stufe (120) und die durchschnittliche Tiefe A2 der zweiten unteren Stufe (220) in einem Bereich von 40 $\mu$m bis 100 $\mu$m liegen.

5. Dichtvorrichtung nach Anspruch 1, wobei der obere und der untere Dichtblock (100, 200) dazu eingerichtet sind, von beiden Seiten davon gegen den Elektrodenleitungs-(300)-Dichtteil der Beuteltyp-Batterie (500) zu drücken und ihn zu erwärmen, und wobei eine Erwärmungstemperatur in einem Bereich von 110 °C bis 200 °C liegt.

6. Beuteltyp-Batterie (500), umfassend:

eine Elektrodenanordnung;
eine Elektrodenleitung (300), welche von der Elektrodenanordnung vorsteht;
einen oberen Beutel (400) und einen unteren Beutel (401), welche dazu eingerichtet sind, die Elektrodenanordnung aufzunehmen; und
einen Elektrodendichtteil,
wobei der Elektrodendichtteil eine Struktur aufweist, wobei die Struktur den oberen und den unteren Beutel (400, 401) umfasst, welche dazu eingerichtet sind, die Elektrodenanordnung derart zu umgeben, dass die Elektrodenleitung (300) der Elektrodenanordnung von der Beuteltyp-Batteriezelle (500) vorsteht,
**dadurch gekennzeichnet, dass** die Bedingung 2 erfüllt ist,

[Bedingung 2]

$$1 \le T2 - T1 \le 25 \ (\mu m),$$

wobei T1 eine durchschnittliche Dicke des oberen Beutels (400) in dem Elektrodenleitungsdichtteil bezeichnet, welcher an einer ersten Fläche der Elektrodenleitung (300) angeordnet ist, und
wobei T2 eine durchschnittliche Dicke des unteren Beutels (401) in dem Elektrodenleitungsdichtteil bezeichnet, welcher an einer zweiten Fläche der Elektrodenleitung (300) angeordnet ist.

7. Beuteltyp-Batterie (500) nach Anspruch 6, wobei T1 in einem Bereich von 80 $\mu$m bis 90 $\mu$m liegt und wobei T2 in einem Bereich von 91 $\mu$m bis 105 $\mu$m liegt.

8. Beuteltyp-Batterie (500) nach Anspruch 6, wobei jeder des oberen und des unteren Beutels (400, 401) umfasst:

   eine erste Harzschicht (410, 411), welche an einer inneren Fläche davon positioniert ist;
   eine Metallschicht; und
   eine zweite Harzschicht (430, 431), welche an einer äußeren Fläche davon positioniert ist,
   wobei in dem Elektrodenleitungsdichtteil ein Verhältnis einer Dicke der ersten Harzschicht (410) des oberen Beutels (400) zu einer gesamten Dicke des oberen Beutels (400) in einem Bereich von 10 % bis 18 % liegt und
   wobei in dem Elektrodenleitungsdichtteil ein Verhältnis einer Dicke der ersten Harzschicht (411) des unteren Beutels (401) zu einer gesamten Dicke des unteren Beutels (401) in einem Bereich von 20 % bis 30 % liegt.

9. Beuteltyp-Batterie (500) nach Anspruch 8,

   wobei eine durchschnittliche Dicke der ersten Harzschicht (410) des oberen Beutels (400) in dem Elektrodenleitungsdichtteil in einem Bereich von 8 $\mu$m bis 17 $\mu$m liegt und
   wobei eine durchschnittliche Dicke der ersten Harzschicht (411) des unteren Beutels (401) in dem Elektrodenleitungsdichtteil in einem Bereich von 20 $\mu$m bis 30 $\mu$m liegt.

10. Beuteltyp-Batterie (500) nach Anspruch 8, ferner umfassend einen nichtabgedichteten Bereich, welcher dazu eingerichtet ist, die Elektrodenanordnung aufzunehmen,

    wobei der nichtabgedichtete Bereich zwischen dem oberen und dem unteren Beutel (400, 401) nicht abgedichtet ist und
    wobei eine durchschnittliche Dicke der ersten Harzschicht (410, 411) jedes des oberen und des unteren Beutels (400, 401) in dem nichtabgedichteten Bereich in einem Bereich von 50 $\mu$m bis 100 $\mu$m liegt.

11. Beuteltyp-Batterie (500) nach Anspruch 6, wobei jeder des oberen und des unteren Beutels (400, 401) umfasst:

    eine erste Harzschicht (410, 411), welche ein Polypropylenharz aufweist,
    eine Metallschicht (420, 421), welche Aluminium oder eine Aluminiumlegierung aufweist, und
    eine zweite Harzschicht (430, 431), welche ein Polyethylenterephthalat- (PET) - Harz aufweist.

12. Beuteltyp-Batterie (500) nach Anspruch 6, wobei die Elektrodenanordnung eine Stapeltyp-Elektrodenanordnung ist.


**Revendications**

1. Dispositif de scellage (10) pour une batterie de type poche (500) comprenant :

   un bloc de scellage supérieur (100) ayant une rainure de scellage supérieure à deux étages (130), la rainure de scellage supérieure à deux étages (130) comportant un premier gradin supérieur (110) configuré pour former une première surface de l'étui de batterie de type poche (440) et un second gradin supérieur (120) disposé entre le premier gradin supérieur (110) et un bloc de scellage inférieur (200) ; et
   le bloc de scellage inférieur (200) ayant une rainure de scellage inférieure à deux étages (230), la rainure de scellage inférieure à deux étages (230) comportant un premier gradin inférieur (210) configuré pour former une seconde surface de l'étui de batterie de type poche (440) et un second gradin inférieur (220) disposé entre le premier gradin inférieur (210) et le bloc de scellage supérieur (100),
   dans lequel le bloc de scellage supérieur (100) est configuré pour être en contact avec une première surface d'une partie de scellage de conducteur d'électrode de la batterie de type poche (500), et le bloc de scellage inférieur (200) est configuré pour être en contact avec une seconde surface de la partie de scellage de conducteur d'électrode de la batterie de type poche, dans lequel le bloc de scellage inférieur (200) est espacé du bloc de scellage supérieur (100) et fait face à celui-ci, et
**caractérisé en ce que** la Condition 1 est satisfaite,

[Condition 1]

$$6.5 \leq \frac{B2-B1}{B1} \times 100 \leq 15\,(\%)$$

dans laquelle B1 représente une différence de profondeur moyenne entre le premier gradin supérieur (110) et le second gradin supérieur (120) dans le bloc de scellage supérieur (100), et B2 représente une différence de profondeur moyenne entre le premier gradin inférieur (210) et le second gradin inférieur (220) dans le bloc de scellage inférieur (200).

2. Dispositif de scellage selon la revendication 1, dans lequel la différence de profondeur moyenne B1 entre le premier gradin supérieur (110) et le second gradin supérieur (120) est dans une plage de 200 $\mu$m à 280 $\mu$m, et dans lequel la différence de profondeur moyenne B2 entre le premier gradin inférieur (210) et le second gradin inférieur (220) est dans une plage de 220 $\mu$m à 320 $\mu$m.

3. Dispositif de scellage selon la revendication 1, dans lequel une différence entre une profondeur moyenne A1 du second gradin supérieur (120) et une profondeur moyenne A2 du second gradin inférieur (220) est de 10 $\mu$m ou moins.

4. Dispositif de scellage selon la revendication 3, dans lequel la profondeur moyenne A1 du second gradin supérieur (120) et la profondeur moyenne A2 du second gradin inférieur (220) sont dans une plage de 40 $\mu$m à 100 $\mu$m.

5. Dispositif de scellage selon la revendication 1, dans lequel les blocs de scellage supérieur et inférieur (100, 200) sont configurés pour presser et chauffer la partie de scellage de conducteur d'électrode (300) de la batterie de type poche (500) par les deux côtés de celle-ci, et dans lequel une température de chauffage est dans une plage de 110 °C à 200 °C.

6. Batterie de type poche (500) comprenant :

un ensemble d'électrodes ;
un conducteur d'électrode (300) faisant saillie à partir de l'ensemble d'électrodes ;
une poche supérieure (400) et une poche inférieure (401) configurées pour accueillir l'ensemble d'électrodes ; et
une partie de scellage d'électrode,
dans laquelle la partie de scellage d'électrode possède une structure, dans laquelle la structure comporte les poches supérieure et inférieure (400, 401) configurées pour envelopper l'ensemble d'électrodes de sorte que le conducteur d'électrode (300) de l'ensemble d'électrodes fasse saillie à partir de l'élément de batterie de type poche (500), **caractérisée en ce que** la Condition 2 est satisfaite,

[Condition 2]

$$1 \leq T2\text{-}T1 \leq 25\ (\mu m),$$

dans laquelle T1 représente une épaisseur moyenne de la poche supérieure (400) dans la partie de scellage de conducteur d'électrode disposée sur une première surface du conducteur d'électrode (300), et
dans laquelle T2 représente une épaisseur moyenne de la poche inférieure (401) dans la partie de scellage de conducteur d'électrode disposée sur une seconde surface du conducteur d'électrode (300).

7. Batterie de type poche (500) selon la revendication 6, dans laquelle T1 est dans une plage de 80 $\mu$m à 90 $\mu$m, et dans laquelle T2 est dans une plage de 91 $\mu$m à 105 $\mu$m.

8. Batterie de type poche (500) selon la revendication 6, dans laquelle chacune des poches supérieure et inférieure (400, 401) comporte :

une première couche de résine (410, 411) positionnée sur une surface interne de celle-ci ;
une couche métallique ; et

une seconde couche de résine (430, 431) positionnée sur une surface externe de celle-ci,
dans laquelle, dans la partie de scellage de conducteur d'électrode, un rapport d'une épaisseur de la première couche de résine (410) de la poche supérieure (400) sur une épaisseur totale de la poche supérieure (400) est dans une plage de 10 % à 18 %, et
dans laquelle, dans la partie de scellage de conducteur d'électrode, un rapport d'une épaisseur de la première couche de résine (411) de la poche inférieure (401) sur une épaisseur totale de la poche inférieure (401) est dans une plage de 20 % à 30 %.

9. Batterie de type poche (500) selon la revendication 8,

dans laquelle une épaisseur moyenne de la première couche de résine (410) de la poche supérieure (400) dans la partie de scellage de conducteur d'électrode est dans une plage de 8 $\mu$m à 17 $\mu$m, et
dans laquelle une épaisseur moyenne de la première couche de résine (411) de la poche inférieure (401) dans la partie de scellage de conducteur d'électrode est dans une plage de 20 $\mu$m à 30 $\mu$m.

10. Batterie de type poche (500) selon la revendication 8 comportant en outre une zone de non scellage configurée pour accueillir l'ensemble d'électrodes,

dans laquelle la zone de non scellage n'est pas scellée entre les poches supérieure et inférieure (400, 401), et
dans laquelle une épaisseur moyenne de la première couche de résine (410, 411) de chacune des poches supérieure et inférieure (400, 401) dans la zone de non scellage est dans une plage de 50 $\mu$m à 100 $\mu$m.

11. Batterie de type poche (500) selon la revendication 6, dans laquelle chacune des poches supérieure et inférieure (400, 401) comporte :

une première couche de résine (410, 411) ayant une résine de polypropylène,
une couche métallique (420, 421) ayant de l'aluminium ou un alliage d'aluminium, et
une seconde couche de résine (430, 431) ayant une résine de polyéthylène téréphtalate (PET).

12. Batterie de type poche (500) selon la revendication 6, dans laquelle l'ensemble d'électrodes est un ensemble d'électrodes de type à empilement.

【FIG. 1】

【FIG. 2】

A1<A2
B1=B2

【FIG. 3】

【FIG. 4】

【FIG. 5】

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210167905
- KR 20160096417
- KR 101527124